# EUROPÄISCHE PATENTANMELDUNG

(11) **EP 2 853 607 A1**
(43) Veröffentlichungstag der Anmeldung: **01.04.2015**
(21) Anmeldenummer: 13185953.0
(22) Anmeldetag: 25.09.2013
(51) Int. Cl.: C21C 5/46, F27B 3/28, F27D 21/00, G01F 23/284

(54) **Ermittlung einer Badspiegelhöhe einer Schmelze oder eines Abstandes einer beweglichen Lanze zur Badspiegelhöhe**

(71) Anmelder: Siemens VAI Metals Technologies GmbH, 4031 Linz (AT)
(72) Erfinder: Hartl, Franz, 4720 Kallham (AT); Kuehas, Thomas, 4222 Luftenberg (AT); Lehofer, Martin, 4050 Traun (AT); Riese, Axel, 4020 Linz (AT); Rohrhofer, Andreas, 4020 Linz (AT); Weinzinger, Michael, 4020 Linz (AT)
(74) Vertreter: Maier, Daniel Oliver

(57) **Zusammenfassung**

Die Erfindung betrifft ein System und ein Verfahren zur Ermittlung einer Badspiegelhöhe (9) einer Schmelze oder eines Abstandes (10) einer beweglichen Lanze (1) zur Badspiegelhöhe (9). Um eine Alternative zu bekannten Messmethoden zur Ermittlung der Badspiegelhöhe (9) oder des Abstandes (10) der beweglichen Lanze (1) zur Badspiegelhöhe (9) bereitzustellen, wird vorgeschlagen, dass das System
- eine bewegliche, zumindest abschnittsweise rohrförmig ausgestaltete Lanze (1) zur Messung oder Beeinflussung physikalischer oder chemischer Größen einer in einem metallurgischen Gefäß (2) befindlichen Schmelze (3),
- zumindest eine Sendeeinheit (4), mittels welcher elektromagnetische Wellen (5) durch den rohrförmigen Abschnitt (6) der beweglichen Lanze (1) hindurch in Richtung der Schmelze (3) aussendbar sind,
- zumindest eine Empfangseinheit (7), mittels welcher die von der zumindest einen Sendeeinheit (4) ausgesendeten und von der Schmelze (3) durch den rohrförmigen Abschnitt (6) der beweglichen Lanze (1) hindurch in Richtung der zumindest einen Empfangseinheit (7) reflektierten elektromagnetischen Wellen (5) empfangbar sind, und
- eine Auswertungseinheit (8) zum Ermitteln einer Badspiegelhöhe (9) der Schmelze (3) und/oder zum Ermitteln eines Abstandes (10) der beweglichen Lanze (1) zur Badspiegelhöhe (9) mit Hilfe der Laufzeit der von der zumindest einen Sendeeinheit (4) in Richtung der Schmelze (3) ausgesendeten, von der Schmelze (3) in Richtung der zumindest einen Empfangseinheit (7) reflektierten und von der zumindest einen Empfangseinheit (7) empfangenen elektromagnetischen Wellen (5)

aufweist.

## Beschreibung

Die Erfindung betrifft ein System und ein Verfahren zur Ermittlung einer Badspiegelhöhe einer Schmelze oder eines Abstandes einer beweglichen Lanze zur Badspiegelhöhe.

Eine derartige Vorrichtung bzw. ein derartiges Verfahren kommen beispielsweise bei hüttentechnischen Anlagen, insbesondere bei Konvertern, zum Einsatz. Bei entsprechenden metallurgischen Prozessen ist es aus prozesstechnischen Gründen notwendig, Prozessgase ins Innere eines derartigen metallurgischen Gefäßes zu leiten. Eine Möglichkeit ist, wie z.B. beim Sauerstoffblaseverfahren, das Prozessgas "Sauerstoff" mittels einer Blaselanze auf eine in einem Konverter befindliche Flüssigphase einzuleiten. Um den eingeblasenen Sauerstoff möglichst effizient im metallurgischen Prozess zu nutzen, ist es von Vorteil, wenn der Abstand zwischen der Oberfläche des Bades, also der Badspiegelhöhe, und dem Blaselanzenkopf konstant gehalten werden kann. Darüber hinaus kann so die Neigung zum "Slopping", das heißt zum Überschäumen der Schlacke im Konverter, reduziert werden.

Der Füllstand des Gefäßes kann durch verschiedene Umstände nicht auf einige Zentimeter genau bestimmt werden. Einflussgrößen, welche die Genauigkeit der Messung beeinträchtigen, sind u.a.:
- das Gefäßvolumen, das sich durch den Verschleiß der Innenausmauerung des Gefäßes verändern kann,
- der Effekt des Aufschmelzens von in das Gefäß gegebenem Stahlschrott, wodurch sich eine Volumenänderung während des Übergangs des festen Schrotts in eine flüssige Schmelze ergibt,
- nicht beeinflussbare Bad-Eindellungen durch strömungstechnische Vorgänge im Bereich des Sauerstoffstrahls, deren Ausmaß nicht eingeschätzt werden kann.

Somit ändert sich der Abstand zwischen dem Blaselanzenkopf und der Oberfläche des Stahlbades während des Prozesses. Eine zuverlässige Messtechnik zur Bestimmung des aktuellen Badspiegels konnte aufgrund der rauen Umgebungsbedingungen bislang nicht realisiert werden.

Bisher werden zur Bestimmung des Füllstands des Gefäßes diskontinuierliche Methoden verwendet, wie zum Beispiel eine exakte Vermessung des Konverter-Innenraums mittels Laser. Alternativ kann der Badspiegel mittels einer verzehrbaren Stange gemessen werden, die an der Blaselanze temporär und manuell befestigt wird. Gegebenenfalls kann auch ein Sublanzensystem zur Bestimmung des Badspiegels eingesetzt werden, zum Beispiel in Form von speziellen Badspiegelmesssonden, mittels welchen die elektrische Leitfähigkeit mittels Wolframelektroden gemessen werden kann. Das Sublanzensystem kann auch als kombinierte Temperatur-/Sauerstoffaktivitätssonde ausgeführt sein, so dass durch eine Signalauswertung am Ende der Prozessphase ein Signalanstieg nach der Passage der Stahl-Schlacke-Grenzschicht erfassbar und damit indirekt die Bestimmung des Badspiegels ermittelbar ist. Insbesondere die kombinierte Temperatur-/Sauerstoffaktivitätssonde leidet allerdings mit einer Trefferquote von ca. 30-40 % an einer geringen Zuverlässigkeit.

In hochautomatisierten Hüttenwerken kann der Badspiegel auch aufgrund der Menge der in den Konverter chargierten Stoffe errechnet werden, was insbesondere aufgrund der oben erläuterten Volumenänderung während des Aufschmelzens von festen Stoffen noch immer eine ungenaue und nicht zufriedenstellende Methode darstellt.

Aus der DE 10 2009 052778 A1 ist ein Verfahren bekannt, für welches ein auf einem Metallbad schwimmender Körper mit einem RF-Sender sowie ein stationärer RF-Empfänger für ein RFID-Verfahren vorgesehen sind und über eine Abstandsbestimmung zwischen dem RF-Sender und dem RF-Empfänger die Höhe des Badspiegels beispielsweise eines Konverters ermittelt wird.

Der Erfindung liegt die Aufgabe zugrunde, eine Alternative zu bekannten Messmethoden zur Ermittlung der Badspiegelhöhe oder des Abstandes der beweglichen Lanze zur Badspiegelhöhe bereitzustellen.

Diese Aufgabe wird durch ein System der eingangs genannten Art dadurch gelöst, dass das System
- eine bewegliche, zumindest abschnittsweise rohrförmig ausgestaltete Lanze zur Messung oder Beeinflussung physikalischer oder chemischer Größen einer in einem metallurgischen Gefäß befindlichen Schmelze,
- zumindest eine Sendeeinheit, mittels welcher elektromagnetische Wellen durch den rohrförmigen Abschnitt der beweglichen Lanze hindurch in Richtung der Schmelze aussendbar sind,
- zumindest eine Empfangseinheit, mittels welcher die von der zumindest einen Sendeeinheit ausgesendeten und von der Schmelze durch den rohrförmigen Abschnitt der beweglichen Lanze hindurch in Richtung der zumindest einen Empfangseinheit reflektierten elektromagnetischen Wellen empfangbar sind, und
- eine Auswertungseinheit zum Ermitteln einer Badspiegelhöhe der Schmelze und/oder zum Ermitteln eines Abstandes der beweglichen Lanze zur Badspiegelhöhe mit Hilfe der Laufzeit der von der zumindest einen Sendeeinheit in Richtung der Schmelze ausgesendeten, von der Schmelze in Richtung der zumindest einen Empfangseinheit reflektierten und von der zumindest einen Empfangseinheit empfangenen elektromagnetischen Wellen
aufweist.

Weiterhin wird diese Aufgabe durch ein Verfahren der eingangs genannten Art dadurch gelöst, dass das Verfahren die folgenden Verfahrensschritte umfasst:
- Aussenden elektromagnetischer Wellen mittels zumindest einer Sendeeinheit durch einen rohrförmigen Abschnitt einer beweglichen Lanze hindurch in Richtung einer in einem metallurgischen Gefäß befindlichen Schmelze,
   wobei die bewegliche Lanze zur Messung oder Beeinflussung physikalischer oder chemischer Größen der Schmelze vorgesehen ist,
- Empfangen der von der zumindest einen Sendeeinheit ausgesendeten und von der Schmelze durch den rohrförmigen Abschnitt der beweglichen Lanze hindurch in Richtung zumindest einer Empfangseinheit reflektierten elektromagnetischen Wellen mittels der zumindest einen Empfangseinheit, und
- Ermitteln einer Badspiegelhöhe der Schmelze und/oder Ermitteln eines Abstandes der beweglichen Lanze zur Badspiegelhöhe mittels einer Auswertungseinheit mit Hilfe der Laufzeit der von der zumindest einen Sendeeinheit in Richtung der Schmelze ausgesendeten, von der Schmelze in Richtung der zumindest einen Empfangseinheit reflektierten und von der zumindest einen Empfangseinheit empfangenen elektromagnetischen Wellen.

Das metallurgische Gefäß ist insbesondere als Konverter zur Stahlerzeugung ausgeführt. Entsprechend handelt es sich bei der Schmelze um ein Metallbad aus flüssigem Stahl oder Eisen, wobei das Metallbad von einer Schlackenschicht bedeckt sein kann. Während eines entsprechenden hüttentechnischen Verfahrens dient die bewegliche Lanze der Messung und/oder Beeinflussung charakteristischer chemischer oder physikalischer Eigenschaften der Schmelze.

Anhand der zumindest einen Sendeeinheit kann ein Strahl elektromagnetischer Wellen produziert werden, der durch den rohrförmigen Abschnitt der beweglichen Lanze geleitet wird. Dabei kann der rohrförmige Abschnitt einen kreisförmigen oder andersartigen Querschnitt aufweisen. Vom Ende der beweglichen Lanze, dem Lanzenkopf, kann der Strahl ungehindert auf den Badspiegel auftreffen, an welchem der Strahl reflektiert wird, um anschließend wiederum durch den rohrförmigen Abschnitt der beweglichen Lanze zur zumindest einen Empfangseinheit zurückzulaufen. Insbesondere werden die elektromagnetischen Wellen derart gewählt, dass sie an der Schmelze, insbesondere am Metallbad und der darauf befindlichen Schlackenschicht, reflektiert werden. Ferner kann die zumindest eine Sendeeinheit gleichzeitig als die zumindest eine Empfangseinheit dienen und somit als zumindest eine Sende- und Empfangseinheit für die elektromagnetischen Wellen ausgebildet sein.

Zur Ermittlung der Höhe des Badspiegels der Schmelze ist eine Auswertungseinheit vorgesehen, welche eine Laufzeitmessung des Impulses der elektromagnetischen Wellen vom Absenden bis zum Empfang der Reflektion vornimmt. Hierzu ist die Auswertungseinheit mit der zumindest einen Sendeeinheit und der zumindest einen Empfangseinheit verbunden. Da die gemessene Laufzeit in direktem Zusammenhang mit der Badspiegelhöhe steht, kann die Auswertungseinheit somit die Badspiegelhöhe ermitteln. Hierzu kann die Auswertungseinheit entsprechend kalibriert werden, wozu beispielsweise der Abstand zwischen der Sendeeinheit und der Empfangseinheit zum metallurgischen Gefäß verwendet wird.

Zusätzlich oder alternativ kann die Auswertungseinheit aus der gemessenen Laufzeit den Abstand der Lanze zum Badspiegel ermitteln. Hierzu können der Auswertungsanreiz insbesondere Daten über die aktuelle Position der beweglichen Lanze bzw. des Lanzenkopfs zugeführt werden. Dabei kann die Auswertungseinheit auch die Auslegung und die Länge der beweglichen Lanze berücksichtigen, insbesondere um Reflexionen des Strahls der elektromagnetischen Wellen an der beweglichen Lanze zu berücksichtigen bzw. zu filtern.

Diese Art der Ermittlung der Badspiegelhöhe bzw. des Abstandes ist sehr zuverlässig und stellt eine kostengünstige Alternative zu bekannten Verfahren zur Ermittlung der Badspiegelhöhe bzw. des Abstandes dar. Denn die erfindungsgemäße Ermittlung der Badspiegelhöhe bzw. des Abstandes kann auf Vorrichtungen zurückgreifen, welche beispielsweise in Form der beweglichen Lanze schon für den hüttentechnischen Prozess erforderlich sind, für welchen das metallurgische Gefäß vorgesehen ist. Insbesondere für bestehende Anlagen müssen somit lediglich die zumindest eine Sendeeinheit, die zumindest eine Empfangseinheit sowie die Auswertungseinheit nachgerüstet werden.

Durch die zuverlässige Ermittlung der Badspiegelhöhe bzw. des Abstandes ist es weiterhin möglich, die Effizienz des im metallurgischen Gefäß ablaufenden metallurgischen Prozesses zu erhöhen und eine Qualitätsverbesserung der produzierten Charge zu erreichen. Dabei führt die verbesserte Qualität auch zu einer größeren Reproduzierbarkeit einer gewünschten metallurgischen Zusammensetzung der Schmelze. Weiterhin kann eine reduzierte Bärenbildung an der beweglichen Lanze erreicht werden, das heißt, dass es zu einer geringeren ungewollten Ablagerung von Metall und/oder Schlacke auf der beweglichen Lanze kommt. Ferner können ein ungewolltes Eintauchen der beweglichen Lanze in die Schmelze und Kollisionen der beweglichen Lanze mit Schrott beim Einfahren in den Konverter durch eine kontinuierliche Bestimmung der Badspiegelhöhe bzw. des Abstandes vermieden werden. Insbesondere wenn die bewegliche Lanze wassergekühlt ist, kann somit auch der Austritt von Kühlwasser zuverlässig verhindert werden, wodurch eine damit einhergehende Explosionsgefahr gebannt ist.

Insbesondere kann die zumindest eine Sendeeinheit und die zumindest eine Empfangseinheit innerhalb des rohrförmigen Abschnitts der beweglichen Lanze angeordnet sein, was eine besonders zuverlässige Ermittlung der Laufzeit gewährleistet. Denn dadurch wird ein guter Schutz der zumindest einen Sendeeinheit und der zumindest einen Empfangseinheit vor widrigen Umgebungseinflüssen, wie zum Beispiel Spritzern flüssigen Metalls, gewährleistet. Alternativ können die zumindest eine Sendeeinheit und die zumindest eine Empfangseinheit in Verlängerung des rohrförmigen Abschnitts der beweglichen Lanze angeordnet sein.

Gegenüber Messverfahren des Badspiegels anhand von in das metallurgische Gefäß einschwenkbaren Messsystemen haben das erfindungsgemäße System und Verfahren den Vorteil, dass die jeweilige Ermittlung der Badspiegelhöhe bzw. des Abstandes während des prozesstechnischen Betriebs der beweglichen Lanze durchgeführt werden kann. Herkömmliche Messverfahren mit einem einschwenkbaren Messsystem können dagegen nur dann durchgeführt werden, wenn die bewegliche Lanze außer Betrieb ist und sich nicht im metallurgischen Gefäß befindet, da derartige Gefäße üblicherweise nur eine gemeinsame Öffnung für die bewegliche Lanze und das Messsystem im Abgassystem aufweisen.

Ferner sind bei dem erfindungsgemäßen System und Verfahren von Vorteil, dass die Badspiegelhöhe lokal und unmittelbar unter dem Lanzenkopf gemessen werden kann, wodurch insbesondere ein Eintauchen der beweglichen Lanze in die Schmelze verhindert werden kann. Dies ist besonders dann von Vorteil, wenn der Badspiegel der Schmelze keine ebene Fläche darstellt, sondern die Schmelze an unterschiedlichen Stellen des metallurgischen Gefäßes unterschiedlich hoch steht. Dies kann beispielsweise durch starke Strömungen der Flüssigphase oder von Prozessgasen während des hüttentechnischen Prozesses verursacht werden.

Schließlich erlaubt das erfindungsgemäße System eine optimale Beeinflussung der physikalischen oder chemischen Größen der Schmelze während des hüttentechnischen Prozesses, wodurch die Effizienz des Prozesses erhöht wird und der metallurgische Prozess optimiert wird, was letztendlich in einer kürzeren "tap-to-tap-time" bzw. Durchlaufzeit der Schmelze führt.

Bei einer vorteilhaften Ausgestaltung der Erfindung sind die elektromagnetischen Wellen Mikrowellen oder Radarwellen.

Mikrowellen oder Radarwellen erlauben eine zuverlässige Ermittlung der Badspiegelhöhe bzw. des Abstandes, insbesondere da sie an der Oberfläche der metallhaltigen Schmelze reflektiert werden und im Gegensatz zu optischen Verfahren Rauch und Abgase durchdringen können. Dabei weisen die Mikrowellen eine Wellenlänge von einigen Millimetern bis einigen Dezimetern bzw. eine Frequenz von 10⁹ Hz bis einigen 10¹¹ Hz auf. Radarwellen weisen eine Wellenlänge von einigen Millimetern bis einigen Zentimetern bzw. eine Frequenz von einigen 10¹⁰ Hz bis einigen 10¹¹ Hz auf.

Bei einer weiteren vorteilhaften Ausgestaltung der Erfindung ist die bewegliche Lanze als Blaselanze zur Zuführung eines Prozessgases zur Schmelze ausgeführt ist.

Die Blaselanze weist dabei wiederum einen rohrförmigen Abschnitt auf, durch welchen das Prozessgas zur Schmelze geführt wird und die elektromagnetischen Wellen von der zumindest einen Sendeeinheit zur Schmelze ausgesendet und zurück zur zumindest einen Empfangseinheit reflektiert werden. Der rohrförmige Abschnitt der Blaselanze kann sowohl für die Beeinflussung des hüttentechnischen Prozesses als auch für die Messtechnik verwendet werden, so dass der rohrförmige Abschnitt somit eine Doppelfunktion erfüllen kann.

Insbesondere kann das Prozessgas hauptsächlich Sauerstoff aufweisen und das metallurgische Gefäß als Konverter ausgeführt sein.

Bei einer weiteren vorteilhaften Ausgestaltung der Erfindung ist der rohrförmige Abschnitt der beweglichen Lanze als separater, rohrförmiger Kanal innerhalb der beweglichen Lanze ausgeführt. Somit sind insbesondere die Zuführung des Prozessgases und die Führung der elektromagnetischen Wellen voneinander getrennt, was besonders zuverlässige Messungen ermöglicht.

Bei einer weiteren vorteilhaften Ausgestaltung der Erfindung weist das System eine Steuerungseinheit und einen Aktuator zum Bewegen der beweglichen Lanze auf, wobei der Aktuator von der Steuerungseinheit derart ansteuerbar ist, dass der ermittelte Abstand gleich einem vorgebbaren Abstand ist.

Beispielsweise kann die Lanze mittels eines elektrischen oder hydraulischen Aktuators, insbesondere mittels eines mit der Lanze verbundenen Antriebsmotors, bewegbar sein, um beispielsweise die Lanze in den Konverter hinein oder aus dem Konverter heraus zu bewegen. Hierzu kann der Aktuator insbesondere als Manipulator bzw. Roboter ausgeführt sein.

Die Bewegungen des Aktuators und somit der beweglichen Lanze werden von der Steuerungseinheit vorgegeben. Dabei ist vorgesehen, dass der Abstand der beweglichen Lanze zur Badspiegelhöhe ermittelt wird und der Aktuator bzw. die bewegliche Lanze derart bewegt werden, dass der ermittelte Abstand gleich einem vorgebbaren Abstand ist. Somit handelt es sich bei dem vorgebbaren Abstand um einen Soll-Abstand und bei dem ermittelten Abstand um einen Ist-Abstand. Hierfür ist die Steuerungseinheit mit der Auswertungseinheit zur Übermittlung des ermittelten Abstandes verbunden, wobei die Steuerungseinheit derartige Ansteuerungssignale an den Aktuator übermittelt, dass die bewegliche Lanze den vorgebbaren Abstand zur Badspiegelhöhe einnimmt.

Der vorgebbare Abstand kann dabei zeitlich variieren und insbesondere von den physikalischen oder chemischen Größen der Schmelze abhängen. Somit kann der vorgebbare Abstand je nach Fortschritt des hüttentechnischen Prozesses variiert werden.

Bei einer weiteren vorteilhaften Ausgestaltung der Erfindung ist die Messung oder Beeinflussung zumindest einer der physikalischen oder chemischen Größen der Schmelze mittels der beweglichen Lanze in Abhängigkeit der ermittelten Badspiegelhöhe und/oder in Abhängigkeit des ermittelten Abstandes durchführbar.

Die ermittelte Badspiegelhöhe bzw. der ermittelte Abstand kann dazu verwendet werden, die Messung oder Beeinflussung der Schmelze durch die bewegliche Lanze zu verändern. Insbesondere wenn die bewegliche Lanze als Blaselanze ausgeführt ist, kann der durch die Blaselanze hindurch geblasene Volumenstrom des Prozessgases an die ermittelte Badspiegelhöhe angepasst werden.

Dies erlaubt beispielsweise bei einer geringeren Menge der in dem metallurgischen Gefäß befindlichen Schmelze eine Verringerung des Volumenstroms des Prozessgases. Durch die präzise und zuverlässige Ermittlung der Badspiegelhöhe kann der im metallurgischen Gefäß ablaufende metallurgische Prozess somit optimiert werden. Alternativ oder zusätzlich erlaubt die genaue Kenntnis des Abstandes zwischen der beweglichen Lanze und der Badspiegelhöhe, den Volumenstrom des Prozessgases gegebenenfalls zu verringern, um ein Spritzen der Schmelze auf die bewegliche Lanze zu verhindern.

Dadurch kann beispielsweise das durch die Blaselanze eingeblasene Prozessgas optimal ausgenutzt werden und die Effizienz des im metallurgischen Prozesses erhöht werden. Insbesondere lassen sich somit die Qualität und die Reproduzierbarkeit der Schmelze erhöhen.

Bei einer weiteren vorteilhaften Ausgestaltung der Erfindung weist das System eine Kommunikationseinheit auf, mittels welcher die ermittelte Badspiegelhöhe und/oder der ermittelte Abstand an ein mit der Kommunikationseinheit verbundenes IT-oder Automatisierungssystem übermittelbar ist.

Zur Datenübermittlung ist die Kommunikationseinheit mit der Auswertungseinheit und gegebenenfalls auch mit der Steuerungseinheit verbunden. Somit kann die ermittelte Badspiegelhöhe bzw. der ermittelte Abstand von der Kommunikationseinheit an das mit der Kommunikationseinheit verbundene IT- oder Automatisierungssystem übermittelt werden. Insbesondere kann das Automatisierungssystem zur Prozesssteuerung des im metallurgischen Gefäß ablaufenden hüttentechnischen Prozesses vorgesehen sein, so dass das Automatisierungssystem diesen Prozess in Abhängigkeit der ermittelten Badspiegelhöhe bzw. des ermittelten Abstandes steuert bzw. regelt.

Das alternative oder zusätzliche IT-System ist vorzugsweise als Condition-Monitoring-System oder als Instandhaltungs-Informations-System ausgeführt, welches beispielsweise den Zustand der beweglichen Lanze oder des metallurgischen Gefäßes dokumentieren, überwachen und gegebenenfalls eine Benachrichtigung an das Automatisierungssystem und/oder Bedienpersonal übermitteln kann. Dabei ist auch ein Zusammenspiel des IT-Systems mit dem Automatisierungssystem denkbar.

Vorzugsweise weist das System weiterhin ein derartiges metallurgisches Gefäß, insbesondere einen derartigen Konverter, auf.

Bei einer alternativen vorteilhaften Ausgestaltung der Erfindung sind dabei eine Steuerungseinheit und ein Aktuator zum Bewegen der beweglichen Lanze vorgesehen, wobei der Aktuator von der Steuerungseinheit derart angesteuert wird, dass der ermittelte Abstand innerhalb eines ersten vorgebbaren Abstandsintervalls ist.

Die Steuerungseinheit und der Aktuator können dabei wie weiter oben schon erläutert ausgeführt sein. Im Rahmen dieser vorteilhaften Ausgestaltung ist vorgesehen, dass der Aktuator die bewegliche Lanze insbesondere dann bewegt, sobald der ermittelte Abstand außerhalb eines ersten vorgebbaren Abstandsintervalls ist. Die Bewegung der Lanze derart, dass der ermittelte Abstand in das erste vorgebbare Abstandsintervall zurückgeführt wird. Durch die Ansteuerung der Lanze lediglich beim Verlassen des ersten vorgebbaren Abstandsintervalls wird vermieden, dass der Aktuator schon bei kleinen Abweichungen von einem optimalen Abstand ständig bewegt wird, wie beispielsweise bei einer Zitterbewegung.

Bei einer weiteren vorteilhaften Ausgestaltung der Erfindung ist eine Kommunikationseinheit vorgesehen, wobei die ermittelte Badspiegelhöhe und/oder der ermittelte Abstand an ein mit der Kommunikationseinheit verbundenes IT- oder Automatisierungssystem übermittelt wird, falls der ermittelte Abstand außerhalb eines zweiten vorgebbaren Abstandsintervalls ist.

Die Kommunikationseinheit und das verbundene IT- oder Automatisierungssystem können wiederum die weiter oben schon erläutert ausgeführt sein. Beispielsweise um unnötige Kommunikation zu vermeiden, ist im Rahmen dieser vorteilhaften Ausgestaltung vorgesehen, die ermittelte Badspiegelhöhe und/oder den ermittelten Abstand zu übermitteln, sobald der ermittelte Abstand außerhalb eines zweiten vorgebbaren Abstandsintervalls ist. Gegebenenfalls kann das erste vorgebbare Abstandsintervall dabei gleich dem zweiten vorgebbaren Abstandsintervall sein.

Bei einer weiteren vorteilhaften Ausgestaltung der Erfindung wird das Aussenden der elektromagnetischen Wellen, das Ermitteln der Badspiegelhöhe und/oder das Ermitteln des Abstandes nur durchgeführt, falls sich die bewegliche Lanze und/oder ein mit der Kommunikationseinheit verbundenes IT- oder Automatisierungssystem in einem vorgebbaren Zustand befindet.

Der vorgebbare Zustand der beweglichen Lanze kann beispielsweise in Bezug auf die Funktionsfähigkeit bzw. einen möglichen Verschleiß oder auch einen bestimmten Betriebszustand der Lanze festgelegt werden. In Abhängigkeit dieses Zustands der beweglichen Lanze kann somit das Aussenden der elektromagnetischen Wellen bzw. die Ermittlung der Badspiegelhöhe und/oder des Abstandes durchgeführt bzw. angepasst werden. Sollte zum Beispiel der Zustand der beweglichen Lanze derart sein, dass die Funktionstüchtigkeit nicht mehr gegeben ist, so könnte auch eine Ermittlung der Badspiegelhöhe bzw. des Abstandes unterlassen werden, beispielsweise da diese Ermittlung mit hoher Wahrscheinlichkeit fehlerbehaftet wäre.

In Bezug auf das IT- oder Automatisierungssystem kann der vorgebbare Zustand beispielsweise der Gestalt sein, dass er den gegenwärtigen Fortschritt des im metallurgischen Gefäß ablaufenden hüttentechnischen Prozesses widerspiegelt. Beispielsweise kann die Ermittlung der Badspiegelhöhe bzw. des Abstandes unterbleiben, wenn bekannt ist, dass sich nach dem Abgießen der Schmelze derzeit keine Schmelze im metallurgischen Gefäß befindet.

Im Folgenden wird die Erfindung anhand der in den Figuren dargestellten Ausführungsbeispiele näher beschrieben und erläutert. Es zeigen:
- FIG 1: ein erstes Ausführungsbeispiel des erfindungsgemäßen Systems und
- FIG 2: ein zweites Ausführungsbeispiel des erfindungsgemäßen Systems.

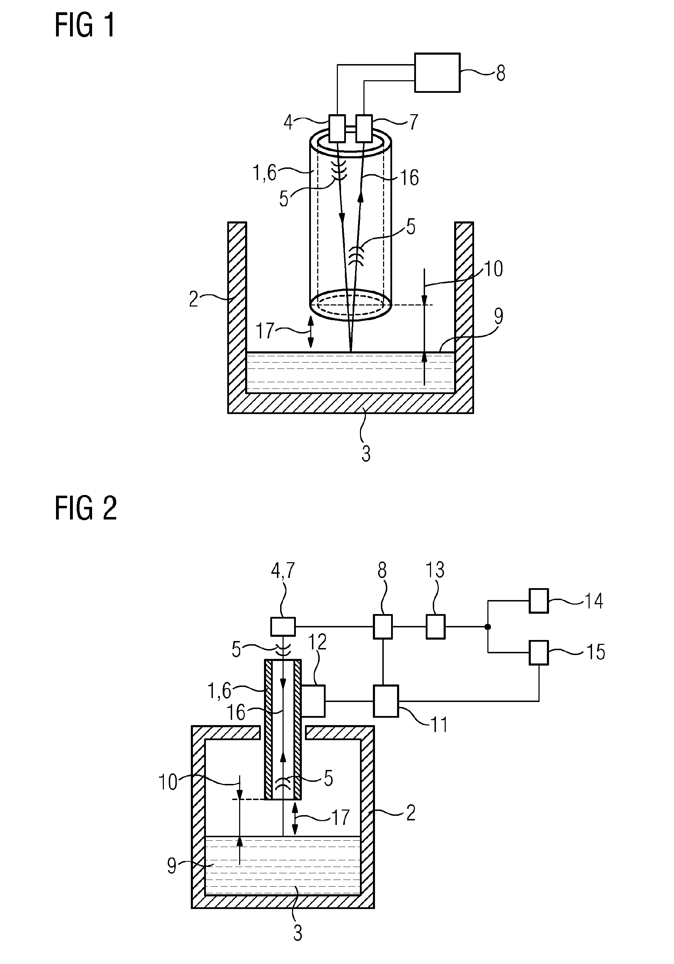

Figur 1 zeigt ein erstes Ausführungsbeispiel des erfindungsgemäßen Systems. Das System weist eine bewegliche Lanze 1 mit einem rohrförmigen Abschnitt 6 auf, wobei die bewegliche Lanze 1 der Messung oder der Beeinflussung physikalischer oder chemischer Größen einer in einem metallurgischen Gefäß 2 befindlichen Schmelze 3 dient. Die bewegliche Lanze 1 ist zumindest entlang der mit dem Bezugszeichen 17 angedeuteten Richtungen zur Schmelze 3 hin oder von der Schmelze 3 weg bewegbar. Bei der Schmelze 3 handelt es sich um eine Flüssigphase, welche das metallurgische Gefäß bis zu einer Badspiegelhöhe 9 ausfüllt.

Weiterhin weist das System eine Sendeeinheit 4 und eine Empfangseinheit 7 auf, wobei die Sendeeinheit 4 elektromagnetische Wellen 5 durch den rohrförmigen Abschnitt 6 der beweglichen Lanze 1 hindurch in Richtung der Schmelze 3 aussenden kann. Ausgesendete elektromagnetische Wellen 5 werden von der Schmelze 3 reflektiert und bilden somit den mit dem Bezugszeichen 16 dargestellten Strahl. Die durch den rohrförmigen Abschnitt 6 in Richtung der Empfangseinheit 7 reflektierten elektromagnetischen Wellen 5 können schließlich von der Empfangseinheit 7 empfangen werden.

Das System weist ferner eine Auswertungseinheit 8 auf, welche zur Datenübertragung sowohl mit der Sendeeinheit 4 als auch mit der Empfangseinheit 7 verbunden ist. Die Auswertungseinheit 8 kann mit Hilfe der Laufzeit der gemäß dem Strahl 16 verlaufenden elektromagnetischen Wellen 5 die Badspiegelhöhe 9 der Schmelze 3 und/oder einen Abstand 10 der beweglichen Lanze 1 zur Badspiegelhöhe 9 ermitteln.

Figur 2 zeigt ein zweites Ausführungsbeispiel des erfindungsgemäßen Systems. Im Unterschied zum ersten Ausführungsbeispiel sind im Rahmen des zweiten Ausführungsbeispiels die Sendeeinheit 4 und die Empfangseinheit 7 durch ein einziges Gerät verwirklicht, welches wiederum mit der Auswertungseinheit 8 verbunden ist. Hinzu kommt, dass die Auswertungseinheit 8 mit einer Kommunikationseinheit 13 verbunden ist, welcher die ermittelte Badspiegelhöhe 9 und/oder den ermittelten Abstand 10 an ein mit der Kommunikationseinheit 13 verbundenes IT-System 14 und/oder an ein mit der Kommunikationseinheit 13 verbundenes Automatisierungssystem 15 übermitteln kann.

Zusätzlich weist das System gemäß dem zweiten Ausführungsbeispiel einen Aktuator 12 zum Bewegen der beweglichen Lanze 1 auf, welcher mit einer Steuerungseinheit 11 verbunden ist. Die Bewegungen des Aktuators 12 und somit der beweglichen Lanze 1 werden von der Steuerungseinheit 11 vorgegeben, welche den Aktuator 12 entsprechend ansteuert.

Die Kommunikationseinheit 8 ist weiterhin mit der Steuerungseinheit 11 verbunden, was beispielsweise eine Regelung der beweglichen Lanze 1 auf einen gewünschten, vorgebbaren Soll-Abstand ermöglicht. Schließlich ist die Steuerungseinheit 11 auch mit dem Automatisierungssystem 15 verbunden, was eine Steuerung bzw. Regelung des im metallurgischen Gefäß 2 ablaufenden hüttentechnischen Prozesses mittels des Automatisierungssystems 15 und mittels der Steuerungseinheit 11 in Abhängigkeit der ermittelten Badspiegelhöhe 9 bzw. des ermittelten Abstandes 10 erlaubt.

Zusammenfassend betrifft die Erfindung ein System und ein Verfahren zur Ermittlung einer Badspiegelhöhe einer Schmelze oder eines Abstandes einer beweglichen Lanze zur Badspiegelhöhe. Um eine Alternative zu bekannten Messmethoden zur Ermittlung der Badspiegelhöhe oder des Abstandes der beweglichen Lanze zur Badspiegelhöhe bereitzustellen, wird vorgeschlagen, dass das System
- eine bewegliche, zumindest abschnittsweise rohrförmig ausgestaltete Lanze zur Messung oder Beeinflussung physikalischer oder chemischer Größen einer in einem metallurgischen Gefäß befindlichen Schmelze,
- zumindest eine Sendeeinheit, mittels welcher elektromagnetische Wellen durch den rohrförmigen Abschnitt der beweglichen Lanze hindurch in Richtung der Schmelze aussendbar sind,
- zumindest eine Empfangseinheit, mittels welcher die von der zumindest einen Sendeeinheit ausgesendeten und von der Schmelze durch den rohrförmigen Abschnitt der beweglichen Lanze hindurch in Richtung der zumindest einen Empfangseinheit reflektierten elektromagnetischen Wellen empfangbar sind, und
- eine Auswertungseinheit zum Ermitteln einer Badspiegelhöhe der Schmelze und/oder zum Ermitteln eines Abstandes der beweglichen Lanze zur Badspiegelhöhe mit Hilfe der Laufzeit der von der zumindest einen Sendeeinheit in Richtung der Schmelze ausgesendeten, von der Schmelze in Richtung der zumindest einen Empfangseinheit reflektierten und von der zumindest einen Empfangseinheit empfangenen elektromagnetischen Wellen
aufweist.

## Patentansprüche

1. System aufweisend
- eine bewegliche, zumindest abschnittsweise rohrförmig ausgestaltete Lanze (1) zur Messung oder Beeinflussung physikalischer oder chemischer Größen einer in einem metallurgischen Gefäß (2) befindlichen Schmelze (3),
- zumindest eine Sendeeinheit (4), mittels welcher elektromagnetische Wellen (5) durch den rohrförmigen Abschnitt (6) der beweglichen Lanze (1) hindurch in Richtung der Schmelze (3) aussendbar sind,
- zumindest eine Empfangseinheit (7), mittels welcher die von der zumindest einen Sendeeinheit (4) ausgesendeten und von der Schmelze (3) durch den rohrförmigen Abschnitt (6) der beweglichen Lanze (1) hindurch in Richtung der zumindest einen Empfangseinheit (7) reflektierten elektromagnetischen Wellen (5) empfangbar sind, und
- eine Auswertungseinheit (8) zum Ermitteln einer Badspiegelhöhe (9) der Schmelze (3) und/oder zum Ermitteln eines Abstandes (10) der beweglichen Lanze (1) zur Badspiegelhöhe (9) mit Hilfe der Laufzeit der von der zumindest einen Sendeeinheit (4) in Richtung der Schmelze (3) ausgesendeten, von der Schmelze (3) in Richtung der zumindest einen Empfangseinheit (7) reflektierten und von der zumindest einen Empfangseinheit (7) empfangenen elektromagnetischen Wellen (5).

2. System nach Anspruch 1,
wobei die elektromagnetischen Wellen (5) Mikrowellen oder Radarwellen sind.

3. System nach einem der vorhergehenden Ansprüche,
wobei die bewegliche Lanze (1) als Blaselanze zur Zuführung eines Prozessgases zur Schmelze (3) ausgeführt ist.

4. System nach einem der vorhergehenden Ansprüche,
wobei der rohrförmige Abschnitt (6) der beweglichen Lanze (1) als separater, rohrförmiger Kanal innerhalb der beweglichen Lanze (1) ausgeführt ist.

5. System nach einem der vorhergehenden Ansprüche,
wobei das System eine Steuerungseinheit (11) und einen Aktuator (12) zum Bewegen der beweglichen Lanze (1) aufweist, wobei der Aktuator (12) von der Steuerungseinheit (11) derart ansteuerbar ist, dass der ermittelte Abstand (10) gleich einem vorgebbaren Abstand ist.

6. System nach einem der vorhergehenden Ansprüche,
wobei die Messung oder Beeinflussung zumindest einer der physikalischen oder chemischen Größen der Schmelze (3) mittels der beweglichen Lanze (1) in Abhängigkeit der ermittelten Badspiegelhöhe (9) und/oder in Abhängigkeit des ermittelten Abstandes (10) durchführbar ist.

7. System nach einem der vorhergehenden Ansprüche,
wobei das System eine Kommunikationseinheit (13) aufweist, mittels welcher die ermittelte Badspiegelhöhe (9) und/oder der ermittelte Abstand (10) an ein mit der Kommunikationseinheit (13) verbundenes IT- oder Automatisierungssystem (14, 15) übermittelbar ist.

8. Verfahren mit den folgenden Verfahrensschritten:
- Aussenden elektromagnetischer Wellen (5) mittels zumindest einer Sendeeinheit (4) durch einen rohrförmigen Abschnitt (6) einer beweglichen Lanze (1) hindurch in Richtung einer in einem metallurgischen Gefäß (2) befindlichen Schmelze (3),
wobei die bewegliche Lanze (1) zur Messung oder Beeinflussung physikalischer oder chemischer Größen der Schmelze (3) vorgesehen ist,
- Empfangen der von der zumindest einen Sendeeinheit (4) ausgesendeten und von der Schmelze (3) durch den rohrförmigen Abschnitt (6) der beweglichen Lanze (1) hindurch in Richtung zumindest einer Empfangseinheit (7) reflektierten elektromagnetischen Wellen (5) mittels der zumindest einen Empfangseinheit (7), und
- Ermitteln einer Badspiegelhöhe (9) der Schmelze (3) und/oder Ermitteln eines Abstandes (10) der beweglichen Lanze (1) zur Badspiegelhöhe (9) mittels einer Auswertungseinheit (8) mit Hilfe der Laufzeit der von der zumindest einen Sendeeinheit (4) in Richtung der Schmelze (3) ausgesendeten, von der Schmelze (3) in Richtung der zumindest einen Empfangseinheit (7) reflektierten und von der zumindest einen Empfangseinheit (7) empfangenen elektromagnetischen Wellen (5).

9. Verfahren nach Anspruch 8,
wobei eine Steuerungseinheit (11) und ein Aktuator (12) zum Bewegen der beweglichen Lanze (1) vorgesehen sind,
wobei der Aktuator (12) von der Steuerungseinheit (11) derart angesteuert wird, dass der ermittelte Abstand (10) gleich einem vorgebbaren Abstand ist.

10. Verfahren nach Anspruch 8,
wobei eine Steuerungseinheit (11) und ein Aktuator (12) zum Bewegen der beweglichen Lanze (1) vorgesehen sind,
wobei der Aktuator (12) von der Steuerungseinheit (11) derart angesteuert wird, dass der ermittelte Abstand (10) innerhalb eines ersten vorgebbaren Abstandsintervalls ist.

11. Verfahren nach einem der Ansprüche 8-10,
wobei eine Kommunikationseinheit (13) vorgesehen ist,
wobei die ermittelte Badspiegelhöhe (9) und/oder der ermittelte Abstand (10) an ein mit der Kommunikationseinheit (13) verbundenes IT- oder Automatisierungssystem (14, 15) übermittelt wird, falls der ermittelte Abstand (10) außerhalb eines zweiten vorgebbaren Abstandsintervalls ist.

12. Verfahren nach einem der Ansprüche 8-11,
wobei das Aussenden der elektromagnetischen Wellen (5), das Ermitteln der Badspiegelhöhe (9) und/oder das Ermitteln des Abstandes (10) nur durchgeführt wird, falls sich die bewegliche Lanze (1) und/oder ein mit der Kommunikationseinheit (13) verbundenes IT- oder Automatisierungssystem (14, 15) in einem vorgebbaren Zustand befindet.

13. Verfahren nach einem der Ansprüche 8-12,
wobei die Messung oder Beeinflussung zumindest einer der physikalischen oder chemischen Größen der Schmelze (3) mittels der beweglichen Lanze (1) in Abhängigkeit der ermittelten Badspiegelhöhe (9) und/oder in Abhängigkeit des ermittelten Abstandes (10) durchgeführt wird.
